# EUROPEAN PATENT SPECIFICATION

(11) **EP 2 724 499 B1**
(45) Date of publication and mention of the grant of the patent: **23.03.2016**
(21) Application number: 12803247.1
(22) Date of filing: 21.06.2012
(51) Int. Cl.: H04L 12/28, H04L 29/08

(54) **A CONTROL METHOD IN A NETWORK**
STEUERVERFAHREN IN EINEM NETZWERK
PROCÉDÉ DE COMMANDE DANS UN RÉSEAU

(30) Priority: 23.06.2011 SE 1150586
(43) Date of publication of application: 30.04.2014
(73) Proprietor: Zoliex AB, 181 22 Lidingö (SE)
(72) Inventor: MERKEL, Harald, SE-437 41 Lindome (SE); HEROLF, Per, SE-181 57 Lidingö (SE); MANGOLD, Stephan, SE-431 38 Mölndal (SE)
(74) Representative: Aros Patent AB
(86) International application number: PCT/SE2012/050697
(87) International publication number: WO 2012/177217

(56) References cited:
- EP-A1- 0 549 005
- WO-A2-2008/120120
- US-A1- 2004 267 382

## Description

### Technical field

The present invention relates to controlling communication in a network, particularly to controlling communication between actuators and sensors attached to a plurality of interconnected network nodes in a network.

### Background

It has been proposed to distribute DC-voltage (VDC) within a Local Area Network using a twisted pair network with a superimposed data communication channel.

US 7,424,031, assigned to Serconet Ltd, discloses a combined VDC and data communication over a twisted pair cable in a local area network (LAN). Existing telephone wiring, or electrical wiring, in a building may be used to create the LAN. The data communication signal may be implemented as a superimposed signal over the DC voltage, as disclosed in US 2003/0036819, paragraph [0048].

EP 0549005 A1 discloses a system for equipment control and comprises a plurality of equipment units and actuator units. The units are linked by a common communication channel, such as a wired bus. Each of the units has a unique address and are associated with a programmable memory for storing an event table. The event table comprises event fields and associated address-and instruction fields. When the unit changes state - referred to as an event-addresses of other units and corresponding instructions are retrieved from the event table and transmitted to the other units via the communication channel. The instructions cause the corresponding other units to change stats, such as being turned on or turned off.

US 20040267382 A1 relates to a system whereby two or more appliances or devices can interact and communicate with each other over common power lines within a building. The system comprises a controller device and a further device, such as a coffee maker appliance, that are coupled to and powered from the wiring of a house. The controller and appliance communicate with each other over the household power lines using a bi-directional power lines communication protocol (PLC). The appliance can operate in a stand-alone mode or in accordance with messages received from the controller via the PLC interface. The appliance generates status messages that are received by the controller thereby keeping the controller apprised of the state of the appliance.

WO 2008120120 discloses the use of logical addresses for networked control systems with communication independent control logic.

Although power distribution and communication has been implemented over a two-wire network, such as a twisted pair cable, there still exists a need to further simplify the communication between units in such a network.

### Summary of the invention

An object with the present invention is to provide a method to control communication between actuators and sensors attached to interconnected network nodes in a network, which method is more efficient than prior art methods.

A more particular object of the invention is to provide a method that simplifies the complex controlling of communication between sensors and actuators that are attached to interconnected network nodes. The method provides a more decentralized control in comparison with the prior art teachings and also enables reduced signaling.

This object is achieved by a method for controlling communication in a network comprising a plurality of interconnected network nodes; each two states, and an actuator performing functions in response to received signals. The method comprises forming a relationship between a "sensor node", i.e. one of the interconnected network nodes to which a sensor is connected, and at least one "actuator nodes", i.e. one of the interconnected network nodes to which one or more actuators are connected, to establish a link there between; storing information of the link in the memory of each actuator node; and controlling the actuators connected to the actuator node. The actuators are controlled by: transmitting a message from the sensor node, which message is generated when the sensor node detects a change in state of the connected sensor; receiving the message at each actuator node; and performing a function in the actuators connected to each actuator node in response to the received message.

An advantage with the present invention is that a centralized control unit is not required and less signalling is required to handle the communication between network nodes compared to when a centralized control unit is implemented.

Further objects and advantages may be found by a skilled person in the art from the detailed description.

### Brief description of drawings

The invention will be described in connection with the following drawings that are provided as non-limited examples, in which:
Fig. 1 shows a prior art system with power distribution and data communication over separate wires.
Fig. 2 shows a first embodiment of a power distribution system according to the present invention.
Fig. 3 shows a flow chart exemplifying replacing a node in a system.
Fig. 4 shows a flow chart exemplifying adding a node in a system.
Fig. 5 shows a lighting example in a system according to the invention.
Fig. 6 shows a heating example in a system according to the invention.
Fig. 7 discloses a flow chart of an embodiment of a method according to the present disclosure.

### Detailed description

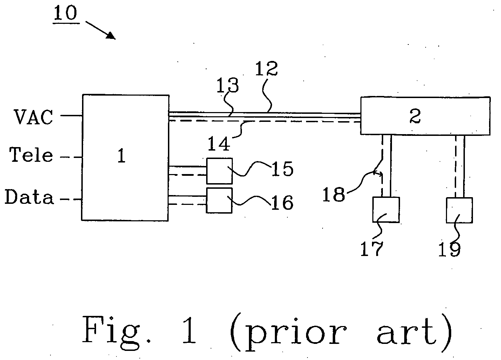

Figure 1 shows a prior art system 10 for power distribution and communication. Incoming VAC (Voltage in Alternating Current), telecommunication and data communication signals are fed to a service entrance unit 1 in which a feed cable for VAC 12 and a feed cable for VDC 13 are provided together with a separate cable 14 for data communication purposes. The incoming VAC is converted to e.g. 48 VDC in the service entrance unit 1, and a cable bundle including AC and DC power distribution as well as data communication is wired throughout a building to one or more network interface 2.

A dedicated network for specific appliances, such as a stove 15 or a laptop computer 16, is also provided in which the required amount of power (VAC for the stove 15 and VDC for the laptop computer 16) may be distributed in response to an interrogation enquiry over a data communication link (dashed lines). Appliances are normally connected to power and communication network via the network interface 2, such as a lamp 17 provided with a power switch 18, or a television set 19.

The lamp requires 48 VDC and a power line is provided between the network interface 2 and the lamp 17. A communication line, e.g. an optic fibre is also provided between the network interface 2 and the lamp via the power switch. The lamp will not be powered if the data communication line is broken, and the lamp will be powered when data communication is established between the network interface and the lamp 17. Examples of optic fibre power switches are provided in US 5,033,112.

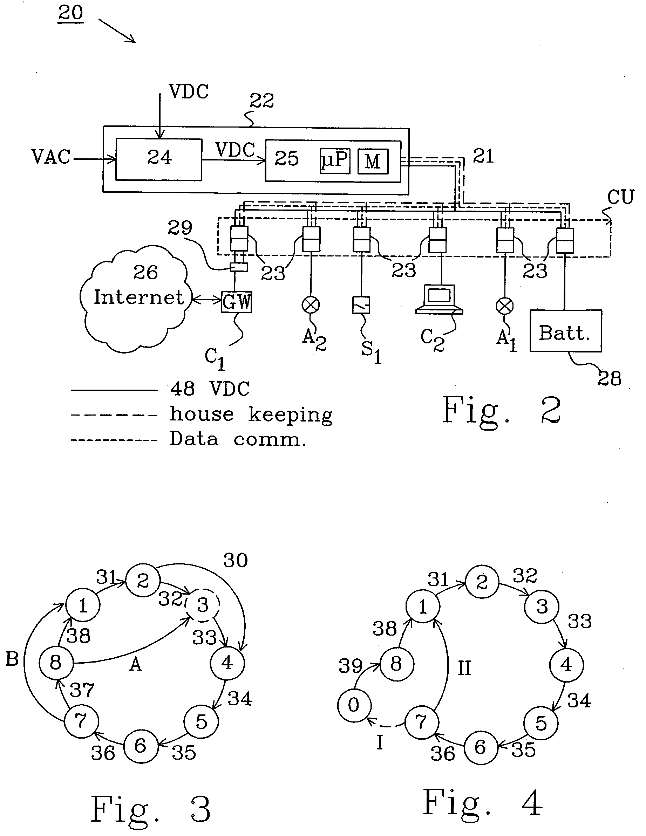

Figure 2 shows a first embodiment of a power distribution system 20 according to the invention. The system 20 is provided with a power converter unit 22 and network nodes 23 connected to a network 21, preferably using only two wires (a so called two-wire network. Power is distributed using only a predetermined DC-voltage (so called network DC-voltage) and the communication between units connected to the two-wire network is preferably performed as superimposed signals. One or more communication channels may be implemented, which may be used for different purposes. For instance a first communication channel may be used for "housekeeping", i.e. to monitor and control different units connected to the two-wire network 21, and a second optional communication channel may be used for high speed data communication.

In the power distribution system, data flow and network control is distributed and carried out by the nodes themselves. A distributed control unit CU is implemented in the nodes 23 as indicated by the dash-dot line, and the power converter unit 22 comprises a power converter 24 and a power fuse unit 25. The power converter 24 converts one or more incoming voltages, such as 230 VAC (mains), any VDC (wind power/solar power), 400 VAC multi-phase (3-phase mains), etc., to a network DC-voltage of less than 50 Volts, preferably 48 VDC, which is fed to the two-wire network 21 via the power fuse unit 25. This may be realised using an AC/DC converter, a multi phase AC/DC converter configured to distribute power load over all phases when generating the network DC-voltage, and/or a DC/DC converter configured to convert any DC voltage to the network DC-voltage. If the incoming voltage is the same DC-voltage as the network DC-voltage, no DC/DC converter is necessary.

The main purpose of the power fuse unit 25 is to forward the network DC-voltage from the power converter 24 to the two-wire network 21. The power fuse unit 25, which is provided with a unique identity, is provided with a transceiver circuitry connected to the two-wire network for communication purposes. In order to prevent an overload (e.g. caused by a short circuit) in the system, the power fuse unit 25 is, in a first embodiment, provided with a power switch configured to terminate forwarding of the network DC-voltage to the two-wire network when activated and also provided with means to monitor an amount of power consumed in the network 21. However, in a second embodiment, the network nodes are configured to monitor the consumed power and control the power available at each network node. An intelligent control of the power consumption of different units attached to the network nodes will reduce the instantaneous power in the system.

As illustrated in Figure 2, the two-wire network 21 is illustrated using a continuous line (representing the network DC-voltage), a dashed line (representing the housekeeping network), and a dotted line (representing the data communication network). Any shape of the two-wire network may be used as long as the network nodes 23 and the power converter unit 22 may communicate with each other.

In the present embodiment, multiple nodes 23, each provided with a unique identity, may be connected to the two-wire network 21 at a suitable location. Each node 23 receives power from the two-wire network 21 and comprises a transceiver circuitry connected to the two-wire network. The unique identity of each node is known to each network node 23 and is stored in a memory within that network node. The network nodes 23 and the power converter unit 22 communicate over the housekeeping network using a protocol. The status of each network node is monitored according to a predetermined scheme.

At least one node of the multiple network nodes is configured as a sensor node and at least one node of the multiple network nodes is configured as an actuator node. A sensor node is defined as a network node being connected to a sensor having at least two states and an actuator node is defined as a network node being connected to at least one actuator. Each sensor node is associated with at least one actuator node and the sensor controls the at least one actuator connected to the associated actuator node in response to the current state of the sensor. The association between each sensor node and the at least one actuator node is preferably stored in the memory in the associated actuator node 23, preferably in the form of a link list as exemplified below in Table 1. However, the association may naturally be stored in the memory of the sensor node, or at both the sensor node and the associated network node.

All the nodes 23 preferably have an identical basic configuration, and may be reconfigured by connecting a sensor unit *Sₙ*, (*n*=*1*, ..., *N*) to any node 23 in order to obtain a sensor node. A sensor unit may be any device belonging to the group: light switch; dimmer; alarm sensor; fire sensor; smoke detector; motion sensor; photo sensor; sound sensor; vibration sensor; moisture sensor; gas sensor; integrity sensor; pressure sensor; image sensor; temperature sensor; or any other device that generates a signal when a change in state is detected. In Figure 2, a sensor unit *S₁* is exemplified as a light switch. The identity of each sensor node is stored in the sensor node, as illustrated in Table 1, together with an indication of sensor type and the current status of the sensor unit (position; percentage of power to be distributed 0-100%; motion/no motion; temperature level, etc.). This information will be used to control any actuator node associated with the sensor node.

**Table 1. Examples of sensor unit information available at the sensor node.**

| Node | Identity | Type | Status |
|---|---|---|---|
| 1 | ID:1 | Switch (1 or 2) | Position 1 |
| 2 | ID:2 | Dimmer (0-100%) | 30% power level |
| 3 | ID:3 | Temperature | 22 °C |
| 4 | ID:4 | Switch (1 or 2) | ON |

The basic configuration of the network nodes 23 may also be reconfigured by connecting an actuator unit *Aₘ*, (*m=l,* ..., *M*) to any node 23 in order to obtain an actuator node. In Figure 2, actuator units *A₁* and *A₂* are exemplified as lamps. An actuator unit may be any device belonging to the group: lamp; lighting system; alarm system; motor; pneumatic system; heater: or any other electrically connected system that performs a function in response to a received signal. The identity of each actuator node is stored in a list together with an indication of the actuator type, as illustrated in Table 2, in the actuator node.

**Table 2. Examples of actuator unit information stored in the network nodes.**

| Identity | Type | Power level |
|---|---|---|
| ID:5 | Lamp | 0%/100% |
| ID:6 | Heater | 0-100% |
| ID:7 | Lamp | 0-100% |
| ID:8 | Lamp | 0%/100% |

As mentioned above, a link list indicating the associations between sensor nodes and actuator nodes is preferably stored in the actuator node. Table 3 illustrates how this may be achieved.

**Table 3. Examples of associations between actuator units and sensor units stored in the actuator node to which the respective actuator unit is connected.**

| Association | Actuator unit | Sensor unit(s) |
|---|---|---|
| 1 | ID:5 | ID:1 and ID:4 |
| 2 | ID:6 | ID:3 |
| 3 | ID:7 | ID:2 |
| 4 | ID:8 | ID:1 and ID:4 |

The first and the fourth associations are together a typical example of a configuration that is needed in stairs, i.e. one switch at the bottom of the stairs and one at the top of the stairs. Both lamps connected to nodes ID:5 and ID:8 may be controlled by either switch connected to node ID:1 or ID:4. If either one of the sensor nodes change their status (i.e. from position 1 to 2, or from position 2 to 1) the power distribution to the lamps will alter (i.e. the lamps will be turned on if they are switched off or the lamps will be switched off if they are turned on). Please note that no extra cables between the switches are needed to obtain the desired function and the configuration may easily be modified by associating more actuator units to the switches, and/or adding a new switch to control the same lamps.

The second association is an example of how to control the heating system in a building in the form of a heater connected to node ID:6 in response to a temperature sensor connected to node ID:3 in the two-wire network. It is naturally possible to include a temperature sensor in suitable locations, such as in every room in the building, and control the heating in every room independently of each other based upon the status of the temperature sensor connected to a node in the two-wire network.

The third association relates to a normal dimmer connected to node ID:2 which may control the amount of power being distributed to a lamp connected to node ID:7 in the two-wire network 21. It is even possible to associate two different dimmers to the same lamp (similar to the switches described above) and the amount of power distributed to the lamp will depend on the combined status of the dimmers or, if desired, the amount of power distributed to the lamp may be independently controlled by either of the dimmers, as long as the association is defined in the network node.

In short, the network nodes 23 are configured to communicate with each other over the housekeeping network to identify changes in the current state of each sensor node and to control each associated actuator node in response to the identified changes in the current state of each sensor unit.

In a system comprising multiple sensor nodes and multiple actuator nodes, and the associations between sensor nodes and actuator nodes may represent arbitrary logical combinations, i.e. logical relations between output variables of sensor nodes and input variables of actuator nodes, or other variables available to the system at this or previous instants. The logical relations' complexities are only limited by the available memory. Furthermore, in most cases a function is coupled to each association. The variations are unlimited, as is obvious to a skilled person, as long as the associations between sensor unit and actuator units are maintained in the system. The change in the current state of each sensor unit is identified by evaluating output variables, and input variables of each associated actuator node are controlled based on the required logical relations using the housekeeping network.

An energy storage unit, such as a battery 28 or the like, may also be connected to a node 23. Energy, which may be used in the event of power failure from the incoming VAC, can be stored to be used whenever the need arises. For instance, energy may be stored in connection with an appliance that requires a high amount of energy over a short time period, such as a stove, iron, water boiler, etc.

The system further may be provided with a data communication network (indicated by the dotted line in the two-wire network) preferably implemented as a second superimposed communication channel on said two-wire network. However, a physically separate communication network, such as an optic fibre may be used without departing from the inventive concept. When a data communication network is present, network nodes are configured to communicate with other network nodes 23 being connected to the data communication network. Some of the nodes 23 may be configured as pure communication nodes, i.e. not connected to a sensor unit *Sₙ* or an actuator unit Aₘ, configured to provide network DC-voltage and data communication to a communication unit *Cp,* (*p=1,* ... , *P*). In Figure 2, communication units have been exemplified as: an Internet Gateway C₁ providing access to Internet 26, a computer C₂ which may have access to Internet provided the network node connected to the gateway C₁ is programmed to allow Internet access for network node 23 to which the computer C₂ is connected.

As a security measure, the network nodes 23, which are configured to communicate with each other over the housekeeping network, may also be configured to monitor the housekeeping network and identify any unauthorized manipulation of the high-speed communication channel over the housekeeping network. Any attempt to program a node via the high-speed communication channel is recorded in at least one of the node detecting the manipulation attempt and at least one communication unit Cp, such as the internet gateway C₁., e.g. the same functionality that ensures conditions are fulfilled and all relevant data is stored. Any attempt to issue illegal commands via the high-speed communication channel will bar the issuer from further access to the communication channels. Any reports generated from firewalls will not only lead to action in the computer system the firewall is installed on but also to a suspension of the identified data source. In order to react to an identified unauthorized manipulation of the housekeeping network, the system is also provided with a data communication switch 29, with a unique identity known to all network nodes 23 within the network, that may be activated by the system to terminate Internet access to all communication units in the two-wire network 21. The data communication switch 29 is preferably, but not necessarily, provided between the communication node and the Internet Gateway. In order to achieve this, the housekeeping network must be separated from the data communication network, either in two physically separated networks or in two separate communication channels on the same physical network.

The amount of power consumed in the two-wire network is preferably monitored at all network nodes in order to identify any short circuits, and possibly prevent accidents caused by rapid power drain, in any part of the two-wire network. Power consumption is monitored by the network nodes that collect information of consumed power from units connected to the network nodes. This may be achieved by monitoring (i.e. measuring) the amount of power consumed in each network node, and control the units connected to each network node in response to the measured values.

The functionality to monitor the amount of power consumed in the network may be implemented in the power fuse unit 25. In order to monitor the amount of power consumed in the network, the power fuse unit 25 is provided with a processor µP and a memory M, in which a complete list of nodes in the network is provided. The power fuse unit 25 is configured to communicate with all connected nodes 23 (each having a power meter to measure the consumed power at each node) and receive information regarding consumed power. The power fuse is typically configured to force all applications to reduce power consumption below a specified level. Only in case of a fatal shortcut, the complete 48V system will be shut off.

Each network node within the system has at least the following information stored in a memory:
- a unique serial number of the node
- a nickname associated with the unique serial number
- the number of nodes "N" within the network

Some network nodes (actuator nodes and/or sensor nodes) also has the following information stored in the memory:
- a list of associations relevant for the network node

The unique serial number is a rather long number, e.g. sixteen hexadecimal numbers; 128 or 256 binary bits, etc., provided by the manufacturer of the node. It is not practical to use this long number when communicating within the network, which is the reason for implementing "nicknames" associated with the long number, such as a number "n". By assigning the nicknames sequential, it is easy to determine the number of nodes "N" within the system as described in connection with Figure 3 and 4 below. When each node has been assigned a sequential nickname, associations between different sensors and actuators connected to the nodes may be established. A list of associations relevant for each node is stored in the dedicated memory.

Figure 3 shows a flow chart exemplifying replacing a node in a system. The flow is a continuous process to verify that all nodes in the network are available and operational. The flow may start from any node, but assume for illustration purposes that the flow starts from node "1". Node "1" requests and obtains a confirmation from node "2", as indicated by arrow 31. Node "2" requests a confirmation from node "3" (as indicated by arrow 32) but receives no confirmation, and node "2" therefore assumes that node "3" is no longer available within the network (as indicated with a dashed circle).

At this point, node "2" forwards a notification to node "N" and may continue to request a confirmation of the next sequential number "4", as indicated by the dashed arrow 30. The notification to node "N" (i.e. node "8" in this example) contains a request that it should change the nickname to "3" and also announce changes to relevant associations when an update request has been received from node "7".

The update request process continues from nodes "4" to node "8", as indicated by the arrows 34-37. Node "8" continues the process by sending an update request to node "1" (as indicated by arrow 38) and after confirmation from node "1" responds to the notification received from node "2" and change the nickname to "3" as indicated by arrow "A". A general announcement to all nodes in the network is transmitted indicating that the number of nodes within the network is reduced to "N-1", i.e. "7" in this example, as node "8" replaces the missing node "3".

Alternatively, node "8" directly responds to the notification received from node "2" and immediately replaces the missing node "3" as indicated by arrow "A". The general announcement to all nodes and the announcement regarding changes to relevant associations are thereafter transmitted. The update request process continues from the new node "3" to node "7" as indicated by arrows 33-36 and node "7" sends an update request to node "1" as indicated by arrow "B".

Figure 4 shows a flow chart exemplifying adding a node in a system. A node not connected to any network has preferably a default nickname, e.g. n="0", which is changed when introduced. In this example the number of nodes in the network is seven, i.e. N="7". The update request proceeds as described in Figure 3 to node "7". The last node in the network performs a special task to detect any newly introduced nodes.

Before sending an update request to node "1", as indicated by arrow "II", node "7" transmits a inquiry to nodes having the default nickname, in this example "0", as indicated by the dashed arrow "I". If a new node is detected, it is introduced into the network as indicated by arrow 39 and given a nickname "N+1", which in this example is "8". Node "8" is now the last node in the network and an announcement to all nodes with this information is transmitted by the node before an update request is made to node "1". If no new nodes are detected, node "7" is sending an update request to node "1".

In the event that more than one new node is attached to the network, then several nodes have the same default nickname. This is taken care of by introducing a delay time for responding to the inquiry transmitted by the last node "N" in the network. The delay time is preferably based upon the unique ID number provided by the manufacturer and/or a random number. The first new node that responds to the inquiry will be arranged as node "N+1" and the update procedure thereafter proceeds to node "1". The same procedure will be repeated when node "N+1" sends an inquiry to nodes having the default nickname and arrange the first node that responds to the inquiry as node "N+2" and the update procedure thereafter proceeds to node "1". This process will be repeated until no nodes with the default nickname may be found.

Please observe that the examples illustrated in Figure 3 and 4 are not related to the actual physical design of the network, and the loop of network nodes only illustrates how the communications between nodes are effectuated. The physical implementation of the network node could have any desired shape, such as the star-shaped network illustrated in Figure 2.

The term distributed control unit CU, as illustrated in Figure 2, indicates that each network node can initialize communication and in order to avoid that a transmitted message from one node to another node is corrupted, a check sum is attached to the message which is checked by the receiving node being the intelligent node in the system. If the check sum is incorrect, the message will be retransmitted. Furthermore, each node has only a local list of associations relevant for the node, and more preferably only the actuator nodes has a local list.

A sensor node may have a list defining which actuator nodes that should be notified when a change in status is detected in the sensor node (e.g. a switch is turned on). This information is transmitted according to the local list of associations to the actuator nodes. In each receiving actuator node, an action is performed based upon the information (e.g. turning on a lamp).

When only the actuator nodes are provided with a list of associations, it is necessary for the sensor node to transmit a message to all network nodes indicating that the state of a sensor has changed, and actuator nodes having a response associated with the changed state will perform the relevant function (e.g. turning on a lamp) based upon the transmitted information.

### Lighting example

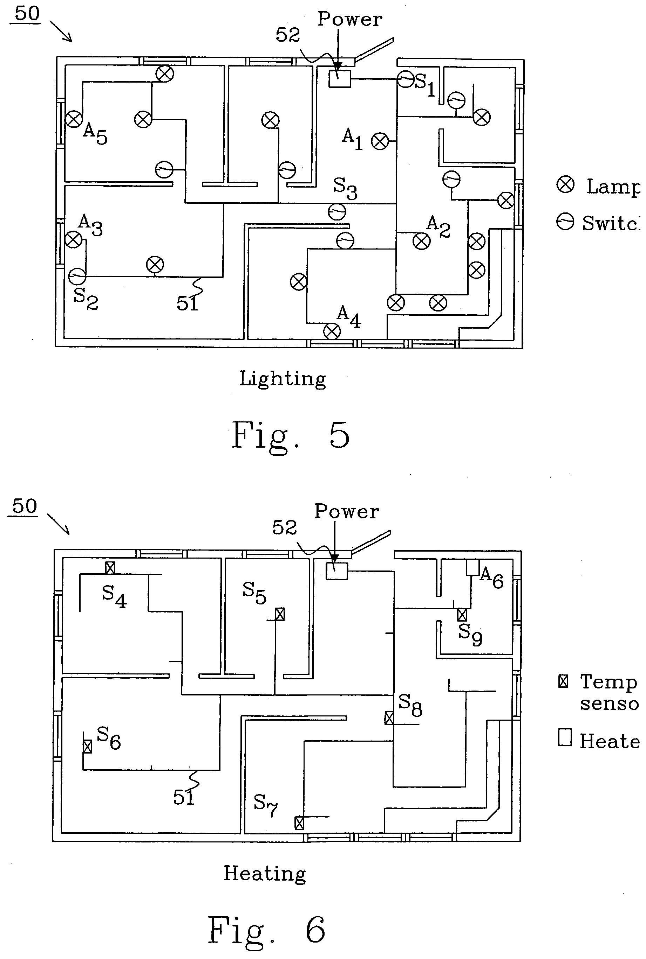

Figure 5 illustrates how lighting may be implemented in a building 50 using a two-wire network 51 provided with multiple network nodes. A power converter unit 52 receives incoming power to energize the two-wire network. Multiple nodes are connected to sensor units, i.e. light switches, S₁-S₃, and multiple nodes are connected to actuator units, i.e. lamps, A₁-A₅.

The identity of each node (i.e. "nickname") is known to the each network node and the associations between sensors and actuators are at least stored in the actuator nodes involved in the required functions, as illustrated in Table 4 and 5. Please observe that the power consumption of each node may be controlled by the power converter unit or by the individual network nodes.

**Table 4. Node identity information including power consumption**

| Node | Identity | Type | Status | Power |
|---|---|---|---|---|
| 1 | S₁ | Switch | Pos 1 | P₁ |
| 2 | A₁ | Lamp | 100% | P₂ |
| 3 | A₂ | Lamp | 100% | P₃ |
| 4 | S₂ | Switch | Pos 2 | P₄ |
| 5 | S₃ | Switch | Pos 1 | P₅ |
| 6 | A₃ | Lamp | 100% | P₆ |
| 7 | A₄ | Lamp | 100% | P₇ |
| 8 | A₅ | Lamp | 100% | P₈ |

**Table 5. Associations between actuator units and sensor units**

| Association | Actuator unit | Sensor unit(s) |
|---|---|---|
| 1 | A1 | S1; S2 |
| 2 | A2 | S1; S2 |
| 3 | A3 | S3 |
| 4 | A4 | S3 |
| 5 | A5 | S3 |

### Heating example

Figure 6 illustrates how heating control may be implemented in the building 50 using the same two-wire network 51 as in Figure 5. The power converter unit 52 receives incoming power to energize the two-wire network, and multiple nodes are connected to sensor units, i.e. temperature sensors, S₄-S₉, and only one node is connected to an actuator unit, i.e. heater, A₆, powered by any type of energy source, such as electricity, gas, oil, kerosene, gasoline, hydrogen or district heating.

As mentioned before, the identity of each node is known and the following associations, see Table 6, between sensor nodes and actuator nodes may be stored in at least the actuator node A₆.

**Table 6. Node identity information including power consumption**

| Node | Identity | Type | Status | Power |
|---|---|---|---|---|
| 9 | S₄ | Temp sensor | Temp 1 | P₉ |
| 10 | S₅ | Temp sensor | Temp 2 | P₁₀ |
| 11 | S₆ | Temp sensor | Temp 3 | P₁₁ |
| 12 | S₇ | Temp sensor | Temp 4 | P₁₂ |
| 13 | S₈ | Temp sensor | Temp 5 | P₁₃ |
| 14 | S₉ | Temp sensor | Temp 6 | P₁₄ |
| 15 | A₆ | Heater | 45% | P₁₅ |

In this case the heat distributed by the heater A₆ is a function of the temperature levels received from sensor units S₄-S₉. Alternatively each room in the building 50 may be individually controlled by a heating loop and then the heater should be divided into six different actuator units all connected to the same node.

The associations between different sensor units and actuator units may be determined using a keypad and a display, but it is also conceivable to set a sensor node in a programmable state (e.g. by pressing a button on the node) and thereafter within a predetermined time period indicate the desired actuator nodes (by a similar button) that should be linked to the sensor node. As may be seen from Figure 5, it is possible to link any switch to any lamp as desired.

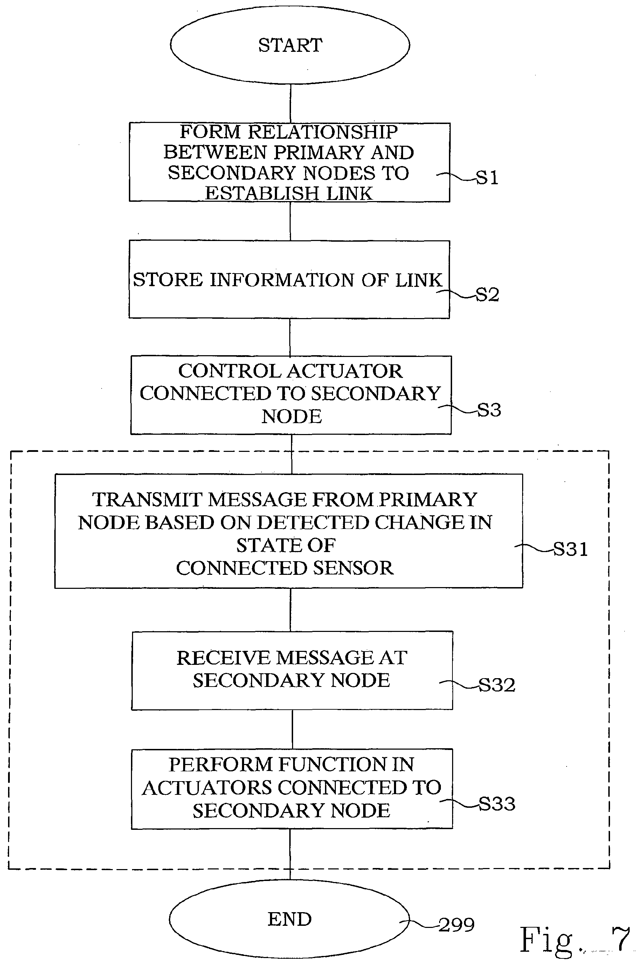

With reference to Figure 7, embodiments of a method according to the present disclosure will be described.

The housekeeping network is used for controlling communication in a network comprising a plurality of interconnected network nodes. The network nodes have been described above and each comprises a processor and a memory in which a unique identity is stored. The unique identity may consist of a rather long sequence of symbols (letters and numbers), which is not suitable to use when addressing a network node. Therefore, the system is designed to allocate a "nickname" to each network node instead of the unique identity to reduce the number of bits needed to address a network node within the network.

A sensor, having at least two states, is connected to at least one network node within the network, and an actuator, performing functions in response to received signals from a sensor, is connected to at least one network node within the network. A relationship is formed, in step S 1, between a primary network node to which a first sensor is connected and at least one secondary network node to which one or more actuators is connected to establish a link there between. The primary and the secondary network node belong to the plurality of interconnected network nodes within the network.

The information of said link is stored, in step S2, in the memory of each secondary network node, and the actuators are controlled, in step S3, by transmitting a message, in step S31 from the primary network node, wherein the message is generated when the primary network node detects a change in state of the first sensor; receiving, in step S32, the message at each secondary network node; and performing, in step 33, a function in the actuators connected to each secondary network node in response to the received message.

As previously mentioned, a sensor is selected to be connected to a network node to create a sensor node and each sensor may be selected from a variety of devices, such as a light switch; dimmer; alarm sensor; fire sensor; smoke detector; motion sensor; photo sensor; sound sensor; vibration sensor; moisture sensor; gas sensor; integrity sensor; pressure sensor; image sensor; temperature sensor; or any other device that generates a signal when a change in state is detected. An example is a light switch having two states (ON/OFF) or a dimmer having a large number of states representing 0-100% of maximum output power.

Also, one or more actuators is selected to be connected to a network node to create an actuator node and each actuator may be selected from many different devices/systems such as a lamp; lighting system; alarm system; motor; pneumatic system; heater: or any other electrically connected system that performs a function in response to a received signal.

In addition to the above, it is possible to create a more complex network of network nodes by arranging a control circuit between multiple sensors, such as a first sensor and a second sensor, and a sensor node. The message generated and transmitted from the sensor node is arranged to be in response to a change in state of the sensors connected to the control circuit, e.g. the change in state of the first sensor and/or the second sensor. This way, temperature variations in a house may be used to control the heater and for instance avoid any unnecessary use of the heater.

The signals generated from the first and second sensor, e.g. temperature sensors, in response to measured parameters are collected in the control circuit. The collected signals are processed in the control circuit before a message is transmitted to the actuator node. The process may involve creating a Boolean expression of the collected signals to control the function of the actuators connected to an actuator node.

As mentioned before, the unique identification number assigned to each node is rather long and there is no need to use it during communication within a network with a limited number of network nodes. Therefore, a unique "nickname" is assigned to each network node, preferably in sequential order. By assigning the network nodes in sequential order it is easy to implement a procedure to identify the network nodes available within the network irrespective of the physical configuration of the network nodes within the network. Pilot signals are preferably used to identify the network nodes. It should be noted that the unique nicknames are assigned to the network nodes in a random manner, with the result that two neighbouring network nodes does not have to have sequential nicknames.

It should also be pointed out that the network node being connected to the actuator (actuator node) is "intelligent" and has link information stored in its memory. For instance, the actuator node has knowledge of which sensor node it has a relationship with and the actuator node is only available to receive a message transmitted from these sensor nodes when no other messages are transmitted between network nodes within the network.

By implementing the present disclosure it is possible to enable improved and simplified control and communication in a network comprising a plurality of interconnected actuators and sensors.

## Claims

1. A method for controlling communication in a network comprising a plurality of interconnected network nodes, each network node comprises a processor and a memory in which a unique identity is stored; a sensor having at least two states; and an actuator performing functions in response to received signals;
**characterized in that** said method comprises:
- forming a relationship (S1) between a primary network node to which a first sensor is connected, said primary network node is one of said plurality of interconnected network nodes, and at least one secondary network node to which one or more actuators are connected, said secondary network node is one of said plurality of interconnected network nodes, to establish a link there between;
- storing information (S2) of said link in the memory of each secondary network node; and
- controlling (S3) said one or more actuators by:
- transmitting (S31) a message from the primary network node, said message is generated when the primary network node detects a change in state of the first sensor;
- receiving (S32) said message at each secondary network node; and
- performing (S33) a function in said one or more actuators connected to each secondary network node in response to the received message.

2. The control method according to claim 1, wherein said method further comprises selecting each sensor to be any of the group: light switch, temperature sensor, dimmer, pressure sensor, fire sensor, smoke detector, alarm sensor; photo sensor; sound sensor; vibration sensor; moisture sensor; gas sensor; integrity sensor; image sensor and motion sensor.

3. The control method according to any of claims 1 or 2, wherein said method further comprises selecting each actuator to be any of the group:
lamp, heater, fire alarm, lighting system, alarm system, motor; pneumatic system and burglar alarm.

4. The method according to any of claims 1-3, wherein said method further comprises:
- arranging a control circuit between said first sensor and the primary network node;
- connecting at least a second sensor to the control circuit; and
- generating the message being transmitted from the primary network node in response to a change in state of the first sensor and/or the second sensor.

5. The method according to claim 4, wherein the method further comprises:
- generating signals from said first and second sensor in response to measured parameters;
- collecting said signals in the control circuit; and
- processing said signals before generating the message to be transmitted.

6. The method according to claim 5, wherein said processing involves creating a Boolean expression of said signals to control the function of said one or more actuators.

7. The method according to any of claims 1-6, wherein said method further comprises assigning a unique nickname to each network node and using pilot signals to identify the network nodes available within the network.

8. The method according to claim 7, wherein said secondary network node is intelligent and the message from the primary network node is received only when the secondary network node is available and no other messages are transmitted between network nodes within the network.

## Patentansprüche

1. Verfahren zum Steuern von Kommunikation in einem Netzwerk, umfassend eine Vielzahl von zusammengeschalteten Netzwerkknoten, wobei jeder Netzwerkknoten einen Prozessor und einen Speicher umfasst, in dem eine eindeutige Identität gespeichert ist; einen Sensor mit wenigstens zwei Zuständen; und einen Aktuator, der Funktionen in Reaktion auf empfangene Signale durchführt; **dadurch gekennzeichnet, dass** das Verfahren umfasst:
- Bilden einer Beziehung (S1) zwischen einem primären Netzwerkknoten, mit dem ein erster Sensor verbunden ist, wobei der primäre Netzwerkknoten einer der Vielzahl von zusammengeschalteten Netzwerkknoten ist, und wenigstens einem sekundären Netzwerkknoten, mit dem ein oder mehrere Aktuatoren verbunden sind, wobei der sekundäre Netzwerkknoten einer der Vielzahl von zusammengeschalteten Netzwerkknoten ist, um eine Verbindung dazwischen herzustellen;
- Speichern von Informationen (S2) der Verbindung im Speicher der einzelnen sekundären Netzwerkknoten; und
- Steuern (S3) des einen oder der mehreren Aktuatoren durch:
- Übertragen (S31) einer Nachricht vom primären Netzwerkknoten, wobei die Nachricht erzeugt wird, wenn der primäre Netzwerkknoten eine Zustandsänderung des ersten Sensors erkennt;
- Empfangen (S32) der Nachricht an jedem sekundären Netzwerkknoten; und
- Durchführen (S33) einer Funktion in dem einen oder den mehreren Aktuatoren in Reaktion auf die empfangene Nachricht.

2. Steuerverfahren nach Anspruch 1, wobei das Verfahren ferner Auswählen jedes Sensors umfasst, derart, dass er ein beliebiger der folgenden Gruppe ist: Lichtschalter, Temperatursensor, Dimmer, Drucksensor, Brandsensor, Rauchdetektor, Alarmsensor; Fotosensor; Tonsensor;
Vibrationssensor; Feuchtigkeitssensor; Gassensor; Intaktheitssensor; Bildsensor und Bewegungssensor.

3. Steuerverfahren nach einem der Ansprüche 1 oder 2, wobei das Verfahren ferner Auswählen jedes Aktuators umfasst, derart, dass er ein beliebiger der folgenden Gruppe ist: Lampe, Heizeinrichtung, Feueralarm, Beleuchtungssystem, Alarmsystem, Motor; Pneumatiksystem und Einbruchalarm.

4. Steuerverfahren nach einem der Ansprüche 1-3, wobei das Verfahren ferner umfasst:
- Anordnen einer Steuerschaltung zwischen dem ersten Sensor und dem primären Netzwerkknoten;
- Verbinden von wenigstens einem zweiten Sensor mit der Steuerschaltung; und
- Erzeugen der Nachricht, die vom primären Netzwerkknoten in Reaktion auf eine Zustandsänderung des ersten Sensors und/oder des zweiten Sensors übertragen wird.

5. Verfahren nach Anspruch 4, wobei das Verfahren ferner umfasst:
- Erzeugen von Signalen von dem ersten und zweiten Sensor in Reaktion auf gemessene Parameter;
- Erfassen der Signale in der Steuerschaltung; und
- Verarbeiten der Signale vor dem Erzeugen der zu übertragenden Nachricht.

6. Verfahren nach Anspruch 5, wobei das Verarbeiten Erstellen eines booleschen Ausdrucks der Signale umfasst, um die Funktion des einen oder der mehreren Aktuatoren zu steuern.

7. Verfahren nach einem der Ansprüche 1-6, wobei das Verfahren ferner Zuweisen eines eindeutigen Kurznamens zu jedem Netzwerkknoten und Verwenden von Pilotsignalen zum Identifizieren der im Netzwerk verfügbaren Netzwerkknoten umfasst.

8. Verfahren nach Anspruch 7, wobei der sekundäre Netzwerkknoten intelligent ist und die Nachricht von dem primären Netzwerkknoten nur empfangen wird, wenn der sekundäre Netzwerkknoten verfügbar ist und keine anderen Nachrichten zwischen Netzwerkknoten im Netzwerk übertragen werden.

## Revendications

1. Procédé de commande de communication dans un réseau comprenant une pluralité de noeuds de réseau interconnectés, chaque noeud de réseau comprend un processeur et une mémoire dans laquelle une identité unique est stockée ; un capteur ayant au moins deux états ; et un actionneur exécutant des fonctions en réponse à des signaux reçus ;
**caractérisé en ce que** ledit procédé comprend :
- la formation d'une relation (S1) entre un noeud de réseau primaire auquel un premier capteur est connecté, ledit noeud de réseau primaire est un de ladite pluralité de noeuds de réseau interconnectés, et au moins un noeud de réseau secondaire auquel un ou plusieurs actionneurs sont connectés, ledit noeud de réseau secondaire est un de ladite pluralité de noeuds de réseau interconnectés, pour établir une liaison entre eux ;
- le stockage d'informations (S2) de ladite liaison dans la mémoire de chaque noeud de réseau secondaire ; et
- la commande (S3) desdits un ou plusieurs actionneurs par :
- la transmission (S31) d'un message à partir du noeud de réseau primaire, ledit message est généré quand le noeud de réseau primaire détecte un changement d'état du premier capteur ;
- la réception (S32) dudit message au niveau de chaque noeud de réseau secondaire ; et
- l'exécution (S33) d'une fonction dans lesdits un ou plusieurs actionneurs connectés à chaque noeud de réseau secondaire en réponse au message reçu.

2. Procédé de commande selon la revendication 1, dans lequel ledit procédé comprend en outre la sélection de chaque capteur comme étant l'un quelconque du groupe : commutateur d'éclairage, capteur de température, gradateur, capteur de pression, détecteur d'incendie, détecteur de fumée, détecteur d'alarme ; capteur de lumière ; capteur de sons ; détecteur de vibrations ; capteur d'humidité ; détecteur de gaz ; capteur d'intégrité ; capteur d'image et capteur de mouvement.

3. Procédé de commande selon l'une quelconque des revendications 1 ou 2, dans lequel ledit procédé comprend en outre la sélection de chaque actionneur comme étant l'un quelconque du groupe : lampe, appareil de chauffage, alarme d'incendie, système d'éclairage, système d'alarme, moteur ; système pneumatique et alarme pour la protection contre le vol.

4. Procédé selon l'une quelconque des revendications 1 à 3, dans lequel ledit procédé comprend en outre :
- la disposition d'un circuit de commande entre ledit premier capteur et le noeud de réseau primaire ;
- la connexion d'au moins un deuxième capteur au circuit de commande ; et
- la génération du message qui est transmis à partir du noeud de réseau primaire en réponse à un changement d'état du premier capteur et/ou du deuxième capteur.

5. Procédé selon la revendication 4, dans lequel le procédé comprend en outre :
- la génération de signaux à partir desdits premier et deuxième capteurs en réponse à des paramètres mesurés ;
- la collecte desdits signaux dans le circuit de commande ; et
- le traitement desdits signaux avant la génération du message à transmettre.

6. Procédé selon la revendication 5, dans lequel ledit traitement implique la création d'une expression booléenne desdits signaux pour commander la fonction desdits un ou plusieurs actionneurs.

7. Procédé selon l'une quelconque des revendications 1 à 6, dans lequel ledit procédé comprend en outre l'attribution d'un pseudonyme unique à chaque noeud de réseau et l'utilisation de signaux pilotes pour identifier les noeuds de réseau disponibles à l'intérieur du réseau.

8. Procédé selon la revendication 7, dans lequel ledit noeuds de réseau secondaire est intelligent et le message provenant du noeud de réseau primaire est reçu seulement quand le noeud de réseau secondaire est disponible et qu'aucun autre message n'est transmis entre des noeuds de réseau à l'intérieur du réseau.
